# EUROPÄISCHE PATENTSCHRIFT

(11) **EP 2 917 115 B1**
(45) Veröffentlichungstag und Bekanntmachung des Hinweises auf die Patenterteilung: **21.09.2016**
(21) Anmeldenummer: 13788982.0
(22) Anmeldetag: 08.11.2013
(51) Int. Cl.: B65B 13/02, B65G 1/137, B65G 57/00

(54) **PACKSTATION MIT STAPELBILDUNGSTRICHTER UND INTEGRIERTER UMREIFUNGSEINRICHTUNG**
PACKAGING STATION PROVIDED WITH A STACK FORMING FUNNEL AND AN INTEGRATED STRAPPING DEVICE
STATION D' EMBALLAGE MUNIE D' UN ENTONNOIR POUR FORMER DES PILES ET D' UN DISPOSITIF DE BANDEROLAGE INTÉGRÉ

(30) Priorität: 09.11.2012 DE 102012022454
(43) Veröffentlichungstag der Anmeldung: 16.09.2015
(73) Patentinhaber: SSI Schäfer Noell GmbH Lager-und Systemtechnik, 97232 Giebelstadt (DE)
(72) Erfinder: ISSING, Elmar, 97232 Giebelstadt (DE)
(74) Vertreter: Witte, Weller & Partner Patentanwälte mbB
(86) Internationale Anmeldenummer: PCT/EP2013/073322
(87) Internationale Veröffentlichungsnummer: WO 2014/072442

(56) Entgegenhaltungen:
- WO-A1-2009/094681
- WO-A1-2009/109218
- US-A1- 2005 217 215

## Beschreibung

Die vorliegende Erfindung betrifft eine Packstation zum, manuellen, Stapeln von Stückgütern nach dem Oberbegriff der Anspruchs 1. Eine derartige Packstation ist aus dem europäischen Patent EP 2 019 799 B1 bekannt. Eine gleichartige Packstation ist aus der WO 2009/109218 A1 bekannt.

Das Patent EP 2 019 799 B1 offenbart eine manuell betriebene Packstation, die im Wesentlichen auf zwei unterschiedlichen Höhenniveaus angeordnet ist. Auf einem ersten, oberen Höhenniveau ist eine Bühne angeordnet, auf der eine Bedienperson steht, um Stückgüter auf einen leeren oder teilweise vorgepackten (Versand-)Ladungsträger, wie z.B. eine Europool-Palette, schichtweise von oben zu packen. Während des Packvorgangs wird die Palette Stück für Stück mittels einer Hubeinrichtung in Richtung des zweiten, unteren Höhenniveaus abgesenkt. Auf dem zweiten, unteren Höhenniveau wird die fertig gepackte Palette gegen eine neue (Leer-) Palette ausgetauscht. Dazu ist auf dem zweiten unteren Höhenniveau eine Paletten-Fördertechnik vorgesehen, die leere Paletten andient und fertig gepackte Paletten abtransportiert. Der eigentliche Arbeitsplatz befindet sich auf dem ersten oberen Höhenniveau und ist im Wesentlichen durch eine Bühne dargestellt. Die Bühne weist eine Öffnung auf, um die Leerpaletten vertikal von unten andienen zu können. Die Öffnung ist mit einer schacht- bzw. trichterförmigen Verkleidung umgeben, um den Packprozess mechanisch seitlich zu unterstützen. Die Verkleidung wirkt als Stapelhilfe und verhindert ein seitliches Umkippen eines gepackten Stückgutstapels. Während immer mehr Stückgutschichten übereinandergeschichtet werden, wird die Palette Stück für Stück nach unten abgesenkt. Die Verkleidung endet unterhalb der Bühne. Um ein Umkippen des Stückgutstapels unterhalb der Verkleidung zu verhindern, wird ein Umwicklungsgerät direkt unterhalb der Bühne vorgesehen, welches in horizontaler Richtung umfänglich um die bepackte Palette kreist. Das Umwicklungsgerät wickelt z.B. eine thermoplastische Folie kraftschlüssig in Umfangsrichtung um den Stückgutstapel, während die bepackte Palette abgesenkt wird, so dass sich eine Folie spiralförmig um den Stapel windet. Um den Stückgutstapel kippsicher auf der Palette zu fixieren, muss jede der gepackten Stückgutschichten mehrfach umfänglich umwickelt werden. Mehrere Umwicklungsprozesse erfordern viel Zeit und viel Folienmaterial. Mit wenigen Umwicklungen wird keine Kippstabilität erreicht. Das Dokument US 2005/0217215 A1 offenbart eine automatisierte Packstation mit einer Umreifungseinrichtung.

Insbesondere im Einzelhandel werden als Versandladungsträger oft auch sog. Gitterrollwägen eingesetzt. Die Gitterrollwägen verfügen üblicherweise über zwei seitliche, sich gegenüberliegende Gitterwände, die eine relative Bewegung von vertikal benachbarten Stückgutschichten zumindest in dieser Richtung unterbinden. Diese Gitterrollwägen lassen sich nur mit großem Aufwand in den oben erwähnten, auf zwei Ebenen angeordneten schachtförmigen Packstationen einsetzen. Wenn die Gitterrollwägen dennoch in den schachtförmigen Packstationen eingesetzt werden, werden üblicherweise Gitterrollwägen mit zwei sich gegenüberliegenden Seitenwangen eingesetzt, so dass die anderen zwei Seiten offen zugänglich sind. Diese Gitterrollwägen werden unterhalb der Bühne positioniert. Die Bedienperson packt die Stückguter auf eine tortenheberähnliche Plattform innerhalb des Schachts. Die tortenheberähnliche Plattform wird Schicht für Schicht bepackt und abgesenkt, bis der Stückgutstapel fertig gestellt ist. Anschließend wird die Plattform vertikal in den Gitterrollwagen eingeführt und horizontal seitlich aus dem Gitterrollwagen herausgezogen, um den Stückgutstapel im Gitterrollwagen abzusetzen. Obwohl die Gitterrollwägen mit jeweils zwei Seitenwangen versehen sind, besteht dennoch die Gefahr, dass vertikal direkt benachbarte Stückgutschichten sich horizontal gegeneinander bewegen können und so ein Umkippen des Stückgutstapels hervorrufen können. Um auch hier die Kippstabilität zu erhöhen, sind zwei Ansätze bekannt. Zum einen können die Gitterrollwägen von außen mit einer thermoplastischen Folie umwickelt werden. Zum anderen können die Gitterrollwägen, nachdem sie die Packstation verlassen haben, in einer separat vorgesehenen Umreifungsstation von außen zusätzlich gesichert werden.

Unter einer Umreifung versteht man das Sichern von Stückgütern mit einem Verschlussband. Bei der Umreifung werden die Stückgüter (in der Packstation) zunächst aufeinandergeschichtet und anschließend in der Umreifungsstation horizontal umfänglich mit einem Umreifungsband umgeben. Das Band wird anschließend gespannt und gesichert.

Die Stückgutstapel können bereits während eines Transports fertig gepackter Gitterrollwägen von der Packstation zur Umreifungsstation verrutschen und umkippen.

Es ist daher eine Aufgabe der vorliegenden Erfindung, die oben erwähnten Nachteile des Stands der Technik zu überwinden und eine verbesserte Packstation vorzusehen.

Diese Aufgabe wird durch eine Packstation gemäß Anspruch 1 gelöst.

Die vorliegenden Erfindung ermöglicht es, Lagen aus Stückgütern willkürlich zu umreifen. Die Umreifung erfolgt umfänglich horizontal, so dass sich einzelne Stückgüter nicht aus ihrer Lage lösen können. Diese Maßnahme verhindert, dass sich vertikal benachbarte Lagen relativ in horizontale Richtung zueinander bewegen oder dass sich Stückgüter aus Lagen lösen und so zu einem Kollaps führen. Der Stückgutstapel wird in sich stabiler. Die Instabilität des Stückgutstapels tritt vermehrt beim manuellen Stapeln auf, wenn die Bedienperson die Stückgüter nach eigenem Belieben zu einem Stapel formt. Die Instabilität bei automatisiert gepackten Stapeln ist geringer, kann aber nicht gänzlich durch die eingesetzten Packmuster-Algorithmen ausgeschlossen werden. Eine Umwicklung mit Folie ist dann entweder gar nicht erforderlich oder nur mit einer sehr geringen Anzahl von Umwicklungen. Durch diese Maßnahme lässt sich Zeit und Folienmaterial sparen. Die Umwicklung kann an einem zentralen (einzigen) Ort erfolgen und muss nicht mehr zwingend am Ort der Packstation durchgeführt werden. Dadurch lassen sich Umwicklungseinrichtungen einsparen, wenn mehrere Packstation betrieben werden.

Selbst wenn Gitterrollwägen als Versandladungsträger eingesetzt werden, können einzelne Lagen innerhalb des Stapels gegen ein horizontales Verrutschen und Auseinanderfallen gesichert werden. Auch in diesem Fall ist eine nachträgliche Umreifung der Gitterseiten von außen, wenn der Stückgutstapel zwischen den Gitterseiten angeordnet ist, gar nicht mehr erforderlich. Das Gleiche gilt für Folienumwicklungen.

Die Bedienperson oder der Packmuster-Algorithmus entscheidet selbst, ob und wann eine Umreifung erforderlich ist. Der Stückgutstapel kann beliebig innerhalb des Trichters vertikal bewegt werden, um die Umreifung auf einer gewünschten Höhe des bereits gepackten Stapels zu platzieren. Üblicherweise bemerkt die Bedienperson bereits während des Packvorgangs, ob eine Lage in sich stabil ist oder nicht. Auch die gängigen Packmuster-Algorithmen sind in der Lage, vorab instabile Stückgut-Positionen innerhalb eines Stapels zu bestimmen. Eine instabile Lage kann dann sofort durch eine Umreifung gesichert werden, so dass eine neu zu bildende Stückgutlage auf der gesicherten Lage gebildet werden kann. Die Umreifung erfolgt, während der Stückgutstapel noch innerhalb des formstabilisierenden Schachts des Packstationtrichters ist.

Herkömmliche Packstationen können nachträglich umgebaut werden, um einer Umreifungseinrichtung zu integrieren.

Bei einer bevorzugten Ausführungsform ist ferner eine Folienwickeleinrichtung vorgesehen, die unterhalb der Öffnung angeordnet ist und die eingerichtet ist, den gepackten Stückgutstapel umfänglich mit einer Folie zu umwickeln, während der Ladungsträger aus der Packposition auf das erste Höhenniveau abgesenkt wird.

Sollte die Umreifung nicht ausreichen, um dem Stapel eine ausreichende Stabilität zu geben, wird zusätzlich eine Folie in Umfangsrichtung horizontal um den sich absenkenden Stapel gewickelt.

Der Kragen erleichtert das ergonomische Packen von Stückgütern auf den Ladungsträger. Die Anordnung der Umreifungseinrichtung zwischen dem Kragen und einem oberen Ende der Wände stellt sicher, dass eine gerade gepackte Lage aus Stückgütern sofort umreift werden kann, bevor eine neue Lage auf der bereits gebildeten Lage gebaut wird.

Weiter ist es von Vorteil, wenn ferner eine Ladungsträger-Fördertechnik und eine Stückgut-Fördertechnik vorgesehen sind, wobei die Ladungsträger-Fördertechnik unter der Bühne hindurch verläuft und wobei die Stückgut-Fördertechnik über die Bühne hinweg geführt ist, insbesondere an einem oberen Ende des Trichters vorbei läuft.

Die Ladungsträger-Fördertechnik wird zum Andienen und Abtransportieren von Ladungsträgern benötigt. Die Stückgut-Fördertechnik wird zum Andienen der zu packenden Stückgüter benötigt. Da von oben schichtweise gepackt wird, ist die Ladungsträger-Fördertechnik unterhalb der Bühne angeordnet und die Stückgut-Fördertechnik oberhalb der Bühne angeordnet. Es versteht sich, dass die Stückgüter mit oder ohne Ladehiffismifitel auf der Stückgut-Fördertechnik befördert werden können.

Die Bedienperson selbst oder Packmuster-Algorithmus entscheidet, ob und wann eine Umreifung erforderlich ist. Eine Umreifung wird in Reaktion auf einen entsprechenden Befehl der Bedienperson veranlasst. Die Bedienperson drückt dazu vorzugsweise eine Taste.

Weiter ist es von Vorteil, wenn der Trichter vier Wände aufweist, wobei der Ladungsträger eine Palette oder ein Gitterrollwagen ist.

Insbesondere erstreckt sich die Umreifungseinrichtung horizontal in Umfangsrichtung um die Öffnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Blockdiagramm einer Kommissionieranlage;
- Fig. 2: eine Seitenansicht einer Packstation gemäß der Erfindung;
- Fig. 3: eine vergrößerte Seitenansicht der Packstation der Fig. 2;
- Fig. 4: eine Draufsicht (Fig. 4A) sowie eine perspektivische Ansicht (Fig. 4B) eines Stapelbildungstrichters der Fig. 3;
- Fig. 5: die Packstation der Fig. 3 während eines Packvorgangs;
- Fig. 6: eine Seitenansicht eines fertig gepackten Ladungsträgers; und
- Fig. 7: eine perspektivische Ansicht eines leeren Ladungsträgers.

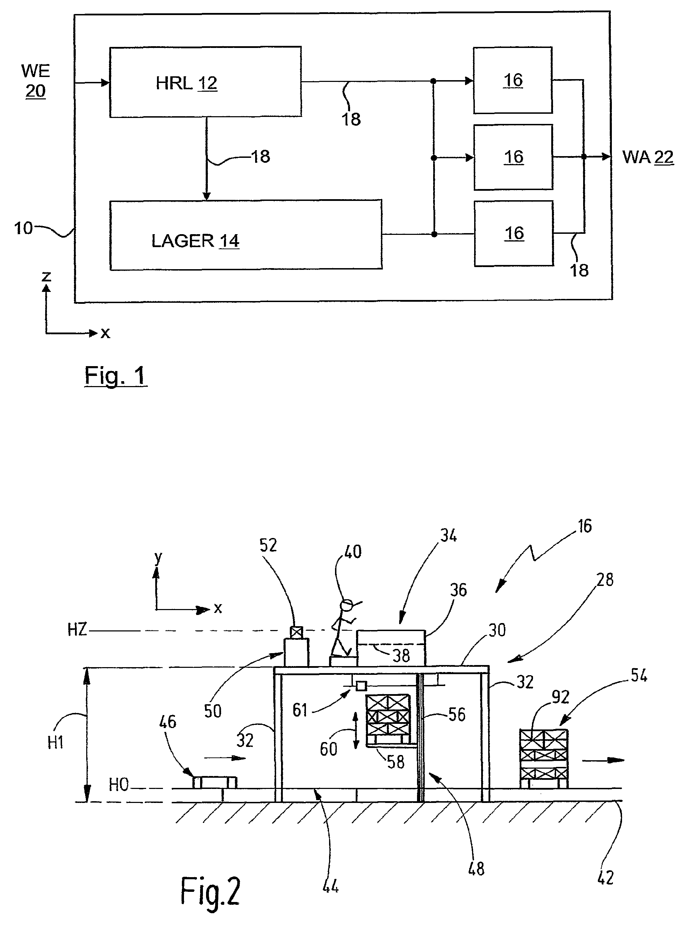

Fig. 1 zeigt eine Lager- und Kommissionieranlage 10 in Form eines Blockdiagramms. Die Anlage 10 weist z.B. ein Hochregallager (HRL) 12 und/oder ein Lager, z.B. ein Tablarlager, 14 auf. Des Weiteren weist die Anlage 10 ein oder mehrere Packstationen 16 gemäß der Erfindung auf. Die Lager 12 und 14 stehen untereinander und mit den Packstationen 16 über ein oder mehrere Fördertechniken 18 in Verbindung. In der Fig. 1 gezeigte Flussrichtungen sind lediglich exemplarischer Natur. Der Materialfluss kann unidirektional oder bidirektional sein. In der Anlage 10 werden Stückgüter gehandhabt, die über einen Wareneingang (WE) 20 zugeführt und über einen Warenausgang (WA) 22 abgeführt werden.

Fig. 2 zeigt eine Seitenansicht einer Packstation 16 der Fig. 1 in stark schematisierter Form. Die Packstation weist eine Bühne 28 auf. Die Bühne 28 weist einen Boden 30 auf, der mittels Pfosten 32 in einer Höhe H1 über einem Lagerboden 42 angeordnet ist. Die Pfosten 32 dienen als Tragkonstruktion für den Boden 30. Oberhalb des Bodens 30 ist ein (Stapelbildungs-)Trichter 34 mit Wänden 36 vorgesehen, in die eine Umreifungseinrichtung 38 integriert ist, die in Fig. 2 durch eine Strichlinie angedeutet ist. Der Trichter 34 wird von einer oder mehreren Bedienpersonen 40 bedient. Alternativ kann auch ein (nicht dargestellter) Packroboter eingesetzt werden.

Auf einem ersten (unteren) Höhenniveau H0 ist eine Ladungsträger-Fördertechnik 44 zum Transport von (Versand-)Ladungsträgern 46 vorgesehen. Die Ladungsträger-Fördertechnik 44 führt unter der Bühne 28 hindurch und weist eine hier nicht näher bezeichnete Schnittstelle zu einer (Ladungsträger-)Hubeinrichtung 48 auf. Die Ladungsträger-Fördertechnik 44 ist auf dem Lagerboden 42 aufgeständert. Die Ladungsträger-Fördertechnik 44 kann ein Kettenförderer sein, um (Europool-)Paletten als Ladungsträger 46 zu transportieren. In der Fig. 2 werden die Paletten von links zugeführt und verlassen die Packstation 16 nach rechts. Die Packstation 16 erstreckt sich räumlich vertikal oberhalb und unterhalb des Bühnenbodens 30. Es versteht sich, dass auch andere (Versand-)Ladungsträger 46 eingesetzt werden können, wie z.B. Halbpaletten, GUS-Paletten, Display-Paletten und andere Formate.

Stückgüter 52, die auf die Paletten zu packen sind, werden auf einem zweiten (oberen) Höhenniveau H2 über eine Stückgut-Fördertechnik 50 angedient. Die Stückgut-Fördertechnik 50 kann z.B. in Form eines Bandförderers oder eines Rollenförderers implementiert sein. Die Stückgüter 52 können auf Ladehilfsmitteln oder getrennt von Ladehilfsmitteln angedient werden. Die Stückgut-Fördertechnik 50 ist oberhalb des Bodens 30 angeordnet und verläuft in unmittelbarer Nähe zur Bedienperson 40. Auf diese Weise ist sichergestellt, dass die Bedienperson 40 die angedienten Stückgüter 52 in den Trichter 34 bewegen kann. Ein exemplarischer Streckenverlauf für die Stückgut-Fördertechnik 50 ist in der internationalen Patentanmeldung WO 2012/085271 A1 gezeigt, auf die hinsichtlich dieses Aspekts verwiesen wird.

Die Stückgüter 52 werden von oben in den Trichter 34 bewegt, um die Ladungsträger 46 schichtweise zu beladen. Auf diese Weise wird auf dem Ladungsträger 46 ein (Stückgut-)Stapel 54 gebildet, wie er exemplarisch im rechten Teil der Fig. 2 auf einer Palette gezeigt ist, die abtransportiert wird. Während eines Packvorgangs wird der Ladungsträger 46 durch die Hubeinrichtung 48 Schritt für Schritt vertikal abgesenkt. Die Hubeinrichtung 48 weist eine (vertikale) Säule 56 auf, entlang der ein Lastaufnahmemittel 58 in der vertikalen Richtung bewegbar ist, wie es durch einen Doppelpfeil 60 angedeutet ist. In der Fig. 2 ist ein Ladungsträger 46 auf dem Lastaufnahmemittel 58 gezeigt. Es versteht sich, dass der Stapel 54 auch ohne Ladungsträger 46 direkt auf das Lastaufnahmemittel 58 gepackt werden kann. Dieser Ladungsträger 46 ist mit bereits mit einigen Stückgutschichten beladen und unter den Boden 30 abgesenkt worden, um dort z.B. von einem Folienwickler 61 mit einer hier nicht näher bezeichneten und gezeigten thermoplastischen Folie in umfänglicher Richtung umwickelt zu werden, während die Palette abgesenkt wird. Auf diese Weise lässt sich eine Folienhülle erzeugen, die den Stückgutstapel 54 spiralartig umgibt. Diese Folienhülle verhindert neben der Umreifung, dass Stückgutschichten auseinander brechen oder horizontal gegeneinander verrutschen und so den Stapel 54 ins Kippen bringen. Der Folienwickler 61 kann in einem kreisförmigen Gestell angeordnet sein, um umfänglich um den Stückgutstapel 54 zu rotieren. Folienwickler 61 sind allgemein bekannt. Gemäß der Erfindung kann die Folienumwicklung aber auch an einem anderen entfernten, vorzugsweise zentralen, Ort erfolgen, wo fertig gepackte und umreifte Stückgutstapel 54 umwickelt werden, die von unterschiedlichen Packstationen 16 stammen können. Die Umwicklung mit Folie an einem entfernten zentralen Ort ist gerade durch die zusätzliche Stabilisierung des Stückgutstapels 54 mittels der erfindungsgemäße Umreifung möglich, wie sie unten noch genauer erläutert werden wird. Die fertig gepackten und umreiften Stückgutstapel 54 sind dann stabil genug, ohne eine Umwicklung mit Folie innerbetrieblich bewegt zu werden, ohne dass der Stapel 54 kollabiert. Die Folienumwicklung ist eigentlich nicht mehr erforderlich, sondern wird nur auf Kundenwunsch zwecks einer Transportsicherung durchgeführt.

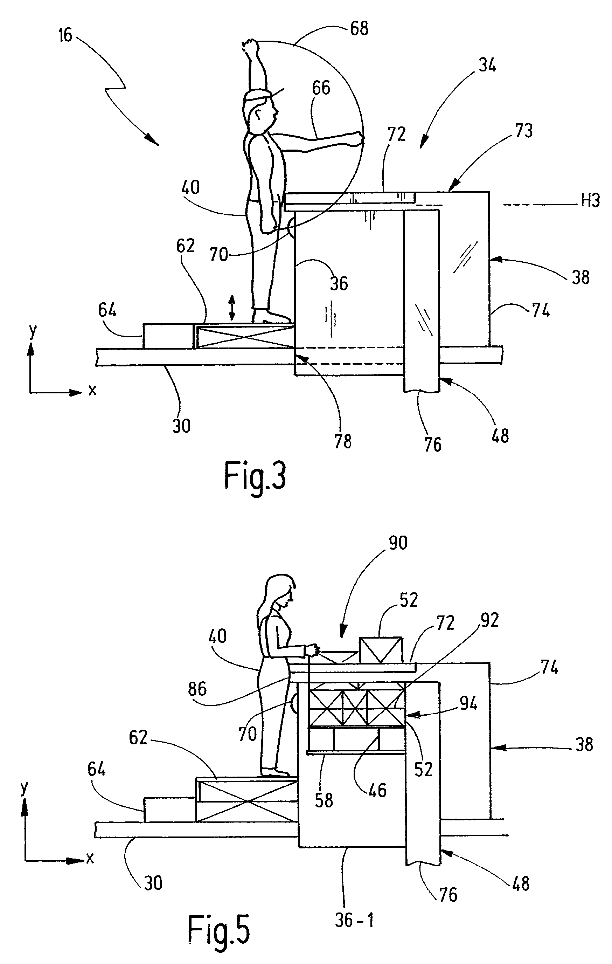

Bezug nehmend auf Fig. 3 ist ein hier nicht näher bezeichneter Arbeitsbereich der Bedienperson 40 in einer Vergrößerung gezeigt, die lediglich einen Teil der Packstation 16 der Fig. 2 zeigt. Es versteht sich, dass die Bedienperson 40 durch einen (nicht gezeigten) Packroboter ausgetauscht werden kann. Nachfolgend wird die Erfindung aber exemplarisch anhand einer manuellen Stapelbildung erläutert.

Die Bedienperson 40 kann auf einem heb- und senkbaren Podest 62 seitlich zum Trichter 34 stehen oder sitzen. Das Podest 62 lässt sich in der vertikalen Richtung heben und senken, um die Bedienperson 40 in eine ergonomische Arbeitshöhe zu bewegen. Wenn die Bedienperson 40 sehr klein ist, muss das Podest 62 höher angehoben werden als bei größeren Bedienpersonen 40 (vgl. Fig. 5). Wenn die Bedienperson 40 sehr klein ist, kann seitlich zum Podest 62 ein stationärer Tritt 64 vorgesehen sein, der als Stufe dient.

In der Fig. 3 ist ein Aktionsbereich 68 in Form eines Halbkreises angedeutet, der durch einen schwenkenden Arm 66 der Bedienperson 40 definiert ist. In einem unteren Abschnitt des Aktionsbereichs 68 bzw. an einem oberen vertikalen Ende 73 des Trichters 34 kann ein Aktuator 70, wie z.B. eine Drucktaste, vorgesehen sein, die datentechnisch mit der Umreifungseinrichtung 38 in Verbindung steht, wie es unten noch näher erläutert werden wird. Weitere Aktuatoren 70 können z.B. für die Hubeinrichtung 48 vorgesehen sein, um den Ladungsträger 46 innerhalb des Trichters 34 anzuheben und/oder abzusenken.

Der Trichter 34 kann einen Kragen 72 an seinem oberen (vertikalen) Ende 73 aufweisen. Der Kragen 72 definiert eine Fläche, auf der die Stückgüter 52 von der in der Fig. 3 nicht dargestellten Stückgut-Fördertechnik 50 in den Trichter 34 bewegt werden können. Vorzugsweise werden die Stückgüter 52 über den Kragen 72 gezogen oder geschoben.

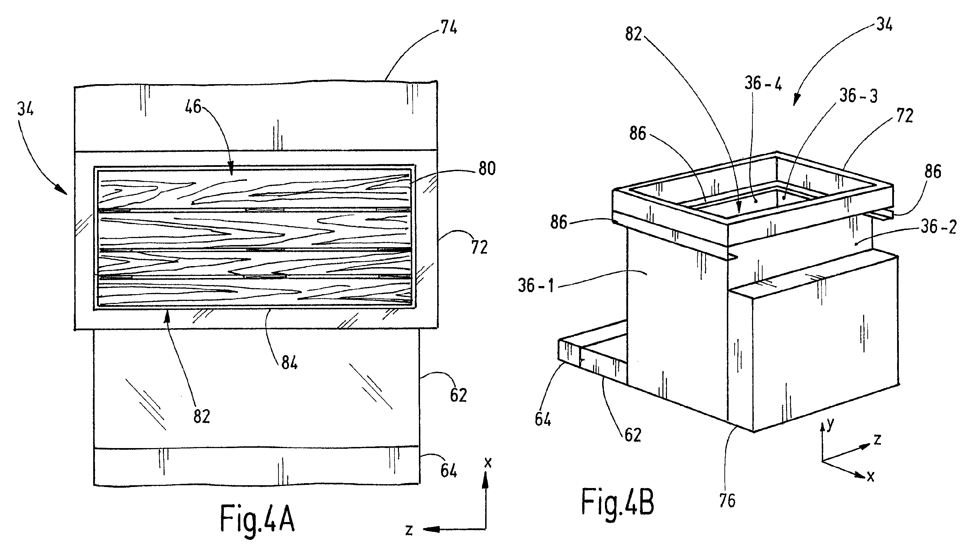

In einem hinteren Bereich des Trichters 34, der der Bedienperson 40 z.B. gegenüberliegt, kann ein Gehäuse 74 der Umreifungseinrichtung 38 vorgesehen sein. Die Umreifungseinrichtung 38 erstreckt sich z.B. am oberen Ende 73 des Trichters 34 umfänglich horizontal um eine schachtartige Öffnung 82 des Trichters 34, die unter Bezugnahme auf Fig. 4 noch näher beschrieben wird.

Des Weiteren kann der Trichter 34 ein Gehäuse 76 der Hubeinrichtung 48 aufweisen. Die Hubeinrichtung 48 erstreckt sich vorzugsweise nahezu bis zum oberen Ende 73 des Trichters 34, um vorzugsweise leere Ladungsträger 46 zwecks Bestückung mit den Stückgütern 52 (vertikal) anzudienen. In der Fig. 3 ist die Hubeinrichtung 48 lateral zwischen einem hier nicht näher bezeichneten Schacht, in dem die Ladungsträger 46 vertikal bewegt werden, und dem Gehäuse 74 der Umreifungseinrichtung 38 angeordnet. Andere relative Anordnungen sind möglich. Der (Bestückungs-)Schacht, die Hubeinrichtung 48 und die Umreifungseinrichtung 38 sind vorzugsweise kompakt als Einheit ausgebildet, wie es exemplarisch in Fig. 4B gezeigt ist.

Bezug nehmend auf Fig. 4 sind eine Draufsicht (Fig. 4A) und eine perspektivische Ansicht (Fig. 4B) des Trichters 34 der Fig. 3 in stark reduzierter Form gezeigt. In der Fig. 4 sind die Bedienperson 40 sowie der Boden 30 der Bühne 28 zur Vereinfachung nicht mehr dargestellt.

In der Draufsicht der Fig. 4A blickt man senkrecht in eine schachtartige Öffnung 82 des Trichters 34, die sich im Wesentlichen vertikal, d.h. parallel zur Höhenrichtung Y, erstreckt. Die schachtartige Öffnung 82 und durch die Wände 36-1 bis 36-4 gebildet. Eine Grundfläche ist durch eine (Außen-)Kontur 80 des Ladungsträgers 46 definiert. Die Wände 36-1 bis 36-4 stehen senkrecht zum waagerecht orientierten Boden 30 der Bühne 28 (vgl. Figuren 3 und 5). Die Wände 36-1 bis 36-2 können optional nach oben konisch zulaufen. Der Ladungsträger wird beim Zuführen von unten zentriert. In diesem Fall bilden die Wände 36 einen geringen Winkel (z.B. 5° bis 10°) zur Lotrechten. Die Wände 36 begrenzen ein Packmaß bzw. ein Überstandsmaß. Unter einem Packmaß versteht man die Grundfläche des Ladungsträgers , z.B. 800 mm x 1200 mm, plus Toleranz, z.B. 10 mm, so dass das Packmaß z.B. 820 mm x 1220 mm beträgt. Die Stückgüter dürfen den Ladungsträger also auf jeder Seite um 10 mm überragen. Selbst wenn die Wände 36 eine geringe Neigung relativ zur Lotrechten aufweisen, wird darunter nachfolgend eine "im Wesentlichen senkrechte Ausrichtung" verstanden.

Eine (Innen-)Kontur 84 der schachtartigen Öffnung 82 ist an die Außenkontur 80 des Ladungsträgers 46, d.h. an dessen Grundfläche, angepasst. Die Wände 36-1 bis 36-4 dienen als seitliche Stützvorrichtungen, damit der zu bildende Stückgutstapel 54 nicht seitlich umfallen kann, und als Begrenzung für ein Packmaß.

Bezug nehmend auf Fig. 4B ist der Trichter 34 der Fig. 4A in einer perspektivischen Ansicht gezeigt. Das Gehäuse 74 der Umreifungseinrichtung 38 ist im Vergleich zur Fig. 4A nicht mehr gezeigt. Das nicht gezeigte Gehäuse 74 dient im Wesentlichen zur Aufnahme von Bauelementen der Umreifungseinrichtung 38, die zur Bevorratung eines Verschlussbands, zum Führen und Spannen des Verschlussbands wie zum Abtrennen benötigt werden. Die Führung des Verschlussbands kann durch Führungsschienen 86 mechanisch unterstützt werden, die oberhalb der Wände 36 umfänglich horizontal zur Öffnung 82 angeordnet sind. In der Fig. 4B sind drei C-förmige Profile gezeigt, deren Öffnungen nach innen gerichtet sind. Die Führungsschienen 86 sind in der vertikalen Richtung Y zwischen den Wänden 36 und dem Kragen 72 angeordnet. Die Führungsschienen 86 sind in einer relativen Höhe H3 (vgl. Fig. 3) angeordnet, die es ermöglicht, eine Stückgutschicht zu umreifen, die gerade eben von der Bedienperson 40 auf den Ladungsträger 46 gestapelt wurde.

Unter Bezugnahme auf Fig. 5, die die Packstation 16 der Figuren 3 und 4 zeigt, wird nachfolgend ein Packvorgang näher beschrieben. Die Bedienperson 40 ist eine (kleinere) Frau, so dass das Podest 62 im Vergleich zur Fig. 3 angehoben ist. Die Bedienperson 40 arbeitet im Stehen, wobei die Ellenbogen der Bedienperson 40 vorzugsweise oberhalb einer oberen Schlusskante des Trichters 34 angeordnet sind.

In der Fig. 5 ist exemplarisch eine Palette als Ladungsträger 46 in einer Packposition 90 gezeigt. Die Packposition 90 zeichnet sich dadurch aus, dass die Bedienperson 40 Stückgüter 52 in den Trichter 34 geben kann, um den Stapel 54 zu bilden, wobei die Stückgüter vorzugsweise abgestellt und nicht geworfen werden. Die relative Höhe des Lastaufnahmemittels 58 ändert sich von Lage zu Lage, während der Ladungsträger 46 weiterhin in der Packposition 90 ist. Eine erste Schicht bzw. Lage 94 aus Stückgütern 52 ist mittels eines Verschlussbands 92 umfänglich horizontal fixiert bzw. umreift. Es versteht sich, dass auch unvollständig gepackte Lagen 94 umreift werden können, z.B. wenn ein zu packendes Stückgut einer Lage 94 fehlt oder nicht zugeführt wurde.

Die Bedienperson 40 packt in der Fig. 5 gerade weitere Stückgüter 52 auf die erste Lage 94, um eine neue Lage 94 aus Stückgütern 52 zu bilden. Eine relative (Höhen-)Position der Umreifungseinrichtung 38 ist für die Bedienperson 40 sichtbar (vgl. Fig. 4B), so dass die Bedienperson 40, sofern es erforderlich ist, die Palette mittels der Hubeinrichtung 48 soweit vertikal ablassen kann, dass die neu gebildete Lage 94 umreift werden kann. Die Umreifungseinrichtung 38 ist vorzugsweise auf einer Höhe angebracht, so eine gerade fertig gepackte Lage 94 umreift werden kann. Die Umreifungseinrichtung 28 ist vorzugsweise in einem Abstand von 50 - 300 mm relativ zu einer Oberkante des Trichters angeordnet. Wenn Rollcontainer eingesetzt werden, kann die Umreifungseinrichtung 38 im Bereich eines unteren Endes des Trichters angeordnet sein, weil die Seitengitter des Rollcontainers während des Stapelns möglicherweise oben aus dem Trichter ragen. Das Ablassen und/oder Anheben der Palette erfolgt vorzugsweise mittels der Aktuatoren 70, wie oben erwähnt. Die Relativbewegung kann aber auch durch eine übergeordnete Steuerung in Abhängigkeit von dem gerade zu packenden Stückgut gesteuert werden, ohne dass die Bedienperson 40 direkte Befehle gibt. Auch das Umreifen der neuen Lage 94 erfolgt über eine Betätigung der Aktuatoren 70, wie ebenfalls bereits oben erwähnt. Die Bedienperson 40 entscheidet selbst, ob eine Lage 94 umreift werden muss oder nicht. Ob eine Lage 94 umreift werden muss oder nicht, hängt insbesondere davon ab, welche Typen von Stückgütern 52 eine aktuelle Lage 94 bilden bzw. ob eine aktuelle Lage stabil oder instabil ist. Wenn die Bedienperson 40 das Gefühl hat, dass die neu gebildete Lage 94 instabil ist, kann sie die neue Lage 94 auf die Höhe der Umreifungseinrichtung 38 ablassen und eine umfängliche horizontale Umreifung veranlassen, während die Lage 94 weiterhin von den Wänden 36 seitlich gestützt ist. Nicht jede neu gebildete Lage 94 muss umreift werden. Die Stabilität des gesamten Stapels 54 kann schon durch wenige Umreifungen derart erhöht werden, dass keine bzw. nur sehr wenige Umwicklungen mit dem Folienwickler 61 erforderlich sind, um den Stapel 54 sicher zu fixieren.

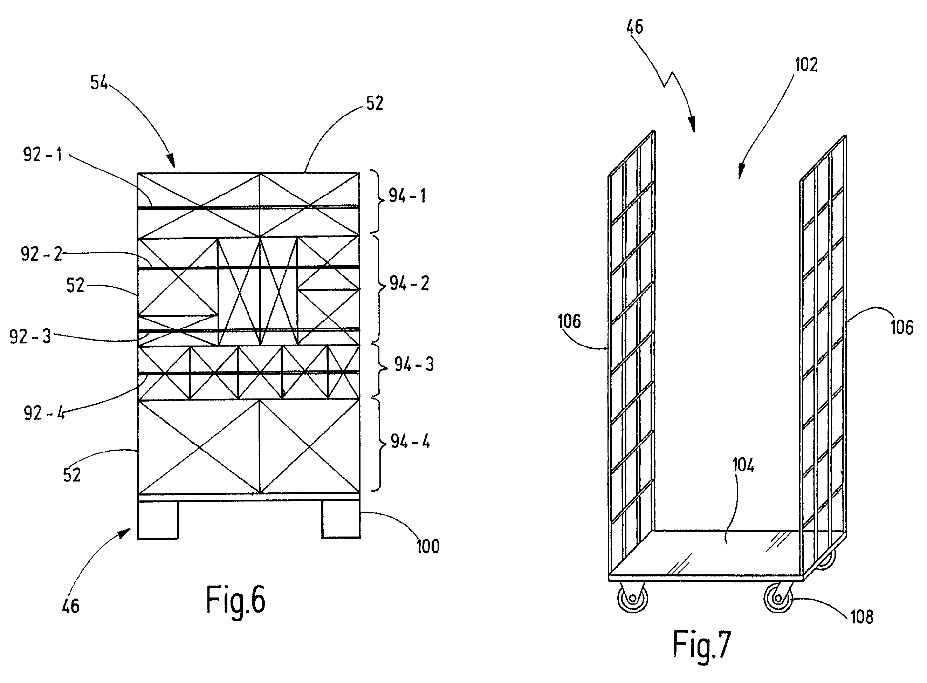

In Fig. 6 ist eine Seitenansicht eines fertig gepackten Ladungsträgers 46 gezeigt, der hier exemplarisch in Form einer Palette 100 realisiert ist. Auf der Palette 100 befindet sich ein fertig gepackter Stapel 54 aus einer Vielzahl von unterschiedlichen Stückgütern 52. Die Stückgüter 52 bilden hier bspw. vier Lagen 94-1 bis 94-4. Es versteht sich, dass Oberseiten und Unterseiten der Lagen 94 nicht zwingend eine planare Fläche definieren. Zur Vereinfachung der Darstellung sind in der Fig. 6 vier Lagen 94 mit planaren Ober- und Unterseiten gezeigt. Eine zweite Lage 94-2 weist unterschiedlich dimensionierte Stückgüter 52 auf.

Eine unterste Lage 94-4 des Stapels 54 der Fig. 6 ist vorzugsweise aus relativ sperrigen und belastbaren Stückgütern 52 gebildet, die stabil auf der Palette 100 stehen. Deshalb hat die Bedienperson 40 entschieden, die unterste Lage 94-4 nicht zu umreifen. Auf die unterste Lage 94-4 folgt eine weitere Lage 94-3, die z.B. aus vielen relativ kleinen Stückgütern 52 gebildet ist. Für diese Lage 94-3 hat die Bedienperson 40 z.B. entschieden, eine Umreifung vorzusehen, die in der Fig. 6 in Form eines horizontal umlaufenden Verschlussbands 92-4 gezeigt ist, das insbesondere unter Spannung um die Stückgüter 52 der Lage 94-3 gezogen ist. Die Spannung ist individuell einstellbar, um die Belastbarkeit unterschiedlicher Stückguttypen zu berücksichtigen. Solange sich das Band 92 um die gewünschte Lage 94 erstreckt, selbst unter einem geringen Winkel gegenüber der Horizontalen, wird nachfolgend von einer im Wesentlichen horizontalen Umreifung gesprochen. Auf die Lage 94-3 folgt darüber eine Lage 94-2. Die Lage 94-2 ist mit zwei Verschlussbändern 92-2 und 92-3 gesichert, da sie aus unterschiedlich dimensionierten Stückgütern 52 besteht. Eine relative Höhe/ vertikaler Abstand der Verschlussbänder 92 ist willkürlich wählbar. Eine oberste Lage 94-1 ist wiederum mit einem Verschlussband 92-1 gesichert. Der Stapel 54 der Fig. 6 ist in sich stabil und deshalb ohne Folienumwicklung versandfertig. Es versteht sich, dass der Stapel 54 optional auch mit einer Folie umwickelt sein kann, sollte dies erforderlich sein. Beide Vorgänge, d.h. die Umreifung und die Umwicklung mit Folie, können während des Absenkens des Stapels 54 innerhalb des Trichters 34 erfolgen. Alternativ kann die Folienumwicklung an einer, vorzugsweise einzigen, zentralen Umwicklungseinrichtung geschehen, die z.B. im Warenausgang angeordnet ist.

Ferner versteht es sich, dass die Packstation 16 der Erfindung nicht nur für Paletten einsetzbar ist. Die Packstation 16 ist vielmehr auch mit Gitterrollwägen 102 kompatibel, von denen einer exemplarisch in Fig. 7 perspektivisch gezeigt ist. Der Gitterrollwagen 102 weist einen Boden 104 mit zwei seitlichen, sich gegenüberliegenden Gitterrollwänden 106 auf, die senkrecht zum Boden 104 orientiert sind. Am Boden 104 können mehrere Laufräder 108 angebracht sein, um den Gitterrollwagen 102 schieben oder ziehen zu können. Ein in der Fig. 7 nicht gezeigter Stückgutstapel 54 würde inklusive bereits vorgesehener Verschlussbänder 92 zwischen die beiden Gitterwände 106 auf dem Boden 104 des Gitterrollwagens 102 abgesetzt werden und könnte dann anschließend mit dem Folienwickler 61 mit einer Folie umwickelt werden. Es versteht sich, dass der Gitterrollwagen 102 auch von außen insgesamt umreift werden kann.

In der oben bestehenden Beschreibung der Figuren hat man sich bei der Wahl der Orientierung der Koordinatensysteme generell an die in der Lagerlogistik üblichen Bezeichnungen gehalten, so dass eine Längsrichtung mit X, eine Querrichtung mit Z und eine (vertikale) Höhe mit Y bezeichnet wurden.

Des Weiteren wurden gleiche Teile und Merkmale mit gleichen Bezugszeichen versehen. Die in der Beschreibung enthaltenen Offenbarungen sind sinngemäß auf gleiche Teile und Merkmale mit denselben Bezugszeichen übertragbar. Lage- und Orientierungsangaben (z.B. "oben", "unten", "seitlich", "längs", "horizontal", "vertikal", "umfänglich" und Ähnliches) sind auf die unmittelbar beschriebene Figur bezogen. Bei einer Änderung der Lage oder Orientierung sind diese Angaben aber sinngemäß auf die neue Lage oder Orientierung zu übertragen.

### Bezugszeichen:

- 10: Kommissionieranlage
- 12: Hochregallager (HRL)
- 14: (Tablar-)Lager
- 16: Packstation
- 18: Fördertechnik (FT)
- 20: Wareneingang
- 22: Warenausgang
- 28: Bühne
- 30: Boden
- 32: Pfosten
- 34: (Stapelbildungs-)Trichter
- 36: Wände
- 38: Umreifungseinrichtung
- 40: Bedienperson
- H1: Höhe Bühne / Boden
- 42: Boden
- H0: 1. Höhenniveau
- 44: Ladungsträger-FT
- 46: (Versand-)Ladungsträger
- H2: 2. Höhenniveau
- 48: Hubeinrichtung
- 50: Stückgut-FT
- 52: Stückgut
- 54: (Stückgut-)Stapel
- 56: Säule(n) von 48
- 58: LAM von 48
- 60: Vertikalbewegung
- 61: Folienwickler
- 62: heb-/senkbares Podest
- 64: Tritt
- 66: Arm
- 68: Aktionsbereich
- 70: Aktuator (Drucktaste)
- 72: Kragen
- 73: oberes Ende von 34
- 74: Gehäuse von 38
- 76: Gehäuse von 48
- 78: Öffnung von 30
- 80: (Außen-)Kontur von 46
- 82: Öffnung von 34
- 84: (Innen-)Kontur von 82
- 86: Führungsschienen (C-Profil)
- 90: Packposition
- 92: Verschlussband
- 94: Lage von Stückgütern
- 100: Palette
- 102: Rollcontainer
- 104: Boden
- 106: Gitterwände
- 108: Räder

## Patentansprüche

1. Packstation (16) zum manuellen Stapeln von Stückgütern (52) auf einem VersandLadungsträger (46), wobei die Stückgüter (52) von einer Bedienperson (40) manuell zu einem Stückgutstapel (54) auf den Ladungsträger (46) gepackt werden, mit:
einer Ladungsträger-Hubeinrichtung (48), die eingerichtet ist, den Ladungsträger (46) vertikal (60) zwischen einem ersten Höhenniveau (H0) und einem zweiten Höhenniveau (H2) zu bewegen, wobei der Ladungsträger (46) auf dem ersten Höhenniveau (H0) mit einer Ladungsträger-Fördertechnik (44) austauschbar ist und wobei sich der Ladungsträger (46) auf dem zweiten Höhenniveau (H2) in einer Packposition (90) befindet, von der aus der Ladungsträger (46) während einer schichtweise von oben erfolgenden Beladung schrittweise absenkbar ist;
einem Stapelbildungs-Trichter (34), der mehrere Wände (36) aufweist, deren Anordnung an eine Außenkontur (80) des Ladungsträgers (46) angepasst ist, und der ferner einen Kragen (72) aufweist, der an einem oberen Ende (73) des Trichters (34) angeordnet ist; und
einer Bühne (28), auf der die Bedienperson (40) steht und auf der der Trichter (34) angeordnet ist, wobei die Bühne (28) eine Öffnung (78) aufweist, die an die Außenkontur (80) des Ladungsträgers (46) angepasst ist, wobei die Wände (36) des Trichters (34) die Öffnung (78) umschließen und wobei die Wände (36) des Trichters im Wesentlichen senkrecht zur Bühne (28) orientiert sind; **dadurch gekennzeichnet, dass**
ferner eine Umreifungseinrichtung (38) vorgesehen ist, wobei die Umreifungseinrichtung (38) eingerichtet ist, ein Verschlussband (92) in einer im Wesentlichen horizontalen Richtung umfänglich an einer gepackten Lage (94) von Stückgütern (52) zu befestigen, während sich der Ladungsträger in der Packposition (90) befindet, dass die Umreifungseinrichtung (38) zwischen dem Kragen (72) und den Wänden (36) angeordnet ist, und
dass ferner ein Aktuator (70) vorgesehen ist, der mit der Umreifungseinrichtung (38) kommuniziert und der durch die Bedienperson betätigbar ist, um einen Umreifungsprozess zu veranlassen.

2. Packstation nach Anspruch 1, wobei ferner eine Folienwickeleinrichtung (61) vorgesehen ist, die unterhalb der Öffnung (78) angeordnet ist und die eingerichtet ist, den gepackten Stückgutstapel (54) umfänglich mit einer Folie zu umwickeln, während der Ladungsträger (46) aus der Packposition (92) auf das erste Höhenniveau (H0) abgesenkt wird.

3. Packstation nach einem der Ansprüche 1 bis 2, wobei ferner eine Ladungsträger-Fördertechnik (44) und eine Stückgut-Fördertechnik (50) vorgesehen sind, wobei die Ladungsträger-Fördertechnik (44) unter der Bühne (28) hindurch verläuft und wobei die Stückgut-Fördertechnik (50) über die Bühne (28) hinweg geführt ist.

4. Packstation nach einem der Ansprüche 1 bis 3, wobei der Trichter (34) vier Wände (36) aufweist und wobei der Ladungsträger (46) eine Palette oder ein Gitterrollwagen (102) ist.

5. Packstation nach einem der Ansprüche 1 bis 4, wobei die Umreifungseinrichtung in einer Höhe (H3) über der Bühne (28) angeordnet ist, so dass eine Lage (94) aus Stückgütern (52), die gerade gebildet und abgesenkt wurde, mit dem Verschlussband (92) umreifbar ist.

6. Packstation nach einem der Ansprüche 1 bis 5, wobei sich die Umreifungseinrichtung (38) horizontal in Umfangsrichtung um die Öffnung (78) erstreckt.

7. Lager- und Kommissionieranlage (10) mit einem Stückgutlager (12, 14) und mindestens einer Packstation (16) nach einem der Ansprüche 1 bis 6.

## Claims

1. A packing station (16) for manually stacking piece-goods (52) on a shipping-load support (46), wherein the piece-goods (52) are packed manually by an operator (40) to form a piece-good stack (54) on the load support (46), comprising:
a load-support lifting device (48) configured to move the load-support (46) vertically (60) between a first height level (H0) and a second height level (H2), wherein the load support (46) can be exchanged at the first height level (H0) by means of a load-support conveying system (44), and wherein the load-support (46) is located at the second height level (H2) in a packing position (90) from where the load support (46) can be lowered gradually while loading is performed layerwise from above;
a stack-forming hopper (34) comprising a number of walls (36), an arrangement of which is adapted to an outer contour (80) of the load-support (46), and further comprising a collar (72) being arranged at an upper end (73) of the hopper (34); and
a platform (28) on which the operator (40) stands and on which the hopper (34) is arranged, wherein the platform (28) comprises an opening (78) which is adapted to the outer contour (80) of the load-support (46), wherein the walls (36) of the hopper (34) surround the opening (78), and wherein the walls (36) of the hopper are orientated substantially perpendicular to the platform (28), **characterized in that**
further a strapping device (38) is provided, wherein the strapping device (38) is configured to fix a sealing ribbon (92) circumferentially in a substantially horizontal direction to a packed layer (94) of piece-goods (52) while the load support is in the packing position (90), that the strapping device (38) is arranged between the collar (72) and the walls (36), and that further an actuator (70) is provided, which communicates with the strapping device (38) and which can be actuated by the operator for causing a strapping process.

2. The packing station of claim 1 further being provided with a foil-wrapping device (61) arranged beneath the opening (78) and being configured to wrap the packed piece-good stack (54) circumferentially by a foil while the load support (46) is lowered from the packing position (90) to the first height level (H0).

3. The packing station of one of claims 1 to 2 further being provided with a load-support conveying system (44) and a piece-good conveying system (50), wherein the load-support conveying system (44) passes beneath the platform (28), and wherein the piece-good conveying system (50) is guided across and above the platform (28).

4. The packing station of one of claims 1 to 3, wherein the hopper (34) comprises four walls (36), and wherein the load-support (46) is a palette or a roll cage (102).

5. The packing station of one of claims 1 to 4, wherein the strapping device is arranged at a height (H3) above the platform (28) so that a layer (94) of piece-goods (52), which has just been formed and lowered, can be strapped by the sealing ribbon (92).

6. The packing station of one of claims 1 to 5, wherein the strapping device (38) extends horizontally in the circumferential direction about the opening (78).

7. A storage and picking system (10) having a piece-good warehouse (12, 14) and at least one packing station (16) according to one of claims 1 to 6.

## Revendications

1. Station d'emballage (16) pour empiler manuellement des articles (52) sur un porteur de charges à expédier (46), les articles (52) étant emballés manuellement par un opérateur (40) pour former une pile d'articles (54) sur le porteur de charges (46), comprenant :
un dispositif de levage de porteur de charges (48) qui est prévu pour déplacer les porteurs de charges (46) verticalement (60) entre un premier niveau en hauteur (H0) et un deuxième niveau en hauteur (H2), le porteur de charges (46) pouvant être remplacé au premier niveau en hauteur (H0) avec une technique de transport de porteurs de charges (44) et le porteur de charges (46) au deuxième niveau en hauteur (H2) se trouvant dans une position d'emballage (90) à partir de laquelle le porteur de charges (46) peut être abaissé progressivement pendant un chargement progressif s'effectuant par le haut ;
un entonnoir de formation de pile (34) qui présente plusieurs parois (36) dont l'agencement est adapté à un contour extérieur (80) du porteur de charges (46) et qui présente en outre un bord (72) qui est disposé au niveau d'une extrémité supérieure (73) de l'entonnoir (34) ; et
une plate-forme (28) sur laquelle se tient l'opérateur (40) et sur laquelle est disposé l'entonnoir (34), la plate-forme (28) présentant une ouverture (78) qui est adaptée au contour extérieur (80) du porteur de charges (46), les parois (36) de l'entonnoir (34) entourant l'ouverture (78) et les parois (36) de l'entonnoir étant orientées essentiellement perpendiculairement à la plate-forme (28) ;
**caractérisée en ce**
**qu'**un dispositif de cerclage (38) est en outre prévu, le dispositif de cerclage (38) étant prévu pour fixer une bande de fermeture (92) dans une direction essentiellement horizontale périphérique sur une couche emballée (94) d'articles (52) pendant que le porteur de charges se trouve dans la position d'emballage (90), en ce que le dispositif de cerclage (38) est disposé entre le bord (72) et les parois (36), et en ce qu'un actionneur (70) est en outre prévu, lequel communique avec le dispositif de cerclage (38) et peut être actionné par l'opérateur afin de permettre une opération de cerclage.

2. Station d'emballage selon la revendication 1, dans laquelle en outre un dispositif d'enroulement de film (61) est prévu, lequel est disposé en dessous de l'ouverture (78) et est prévu pour envelopper d'un film la pile d'articles emballés (54) sur sa périphérie, pendant que le porteur de charges (46) est abaissé depuis la position d'emballage (92) sur le premier niveau en hauteur (H0).

3. Station d'emballage selon l'une quelconque des revendications 1 à 2, dans laquelle un système technique de transport de porteurs de charges (44) et un système technique de transport d'articles (50) sont en outre prévus, le système technique de transport de porteurs de charges (44) s'étendant en dessous de la plate-forme (28) et le système technique de transport d'articles (50) étant guidé au-delà de la plate-forme (28).

4. Station d'emballage selon l'une quelconque des revendications 1 à 3, dans laquelle l'entonnoir (34) présente quatre parois (36) et dans laquelle le porteur de charges (46) est une palette ou un chariot roulant grillagé (102).

5. Station d'emballage selon l'une quelconque des revendications 1 à 4, dans laquelle le dispositif de cerclage est disposé à une hauteur (H3) au-dessus de la plate-forme (28) de telle sorte qu'une couche (94) d'articles (52) qui a justement été formée et abaissée puisse être cerclée avec la bande de fermeture (92).

6. Station d'emballage selon l'une quelconque des revendications 1 à 5, dans laquelle le dispositif de cerclage (38) s'étend horizontalement dans la direction périphérique autour de l'ouverture (78).

7. Installation de stockage et de préparation des commandes (10) comprenant un entrepôt de stockage d'articles (12, 14) et au moins une station d'emballage (16) selon l'une quelconque des revendications 1 à 6.
